(19)

Europäisches Patentamt
European Patent Office
Office européen des brevets

(11) **EP 3 421 836 A1**

(12) **EUROPEAN PATENT APPLICATION**
published in accordance with Art. 153(4) EPC

(43) Date of publication:
02.01.2019 Bulletin 2019/01

(21) Application number: 17756236.0

(22) Date of filing: 10.02.2017

(51) Int Cl.:
*F16F 15/26* (2006.01)          *F01B 7/16* (2006.01)
*F01B 9/02* (2006.01)          *F02G 1/053* (2006.01)
*F16C 3/08* (2006.01)          *F02B 77/00* (2006.01)

(86) International application number:
**PCT/JP2017/004860**

(87) International publication number:
**WO 2017/145795 (31.08.2017 Gazette 2017/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **26.02.2016  JP 2016035526**

(71) Applicant: **Yanmar Co., Ltd.
Osaka-shi, Osaka 530-8311 (JP)**

(72) Inventors:
• **SUEZAKI ,Tatsuya
Osaka-shi
Osaka 530-8311 (JP)**
• **MORI, Hisanori
Osaka-shi
Osaka
5308311 (JP)**

(74) Representative: **Hinkelmann, Klaus
Patentanwaltskanzlei Hinkelmann
Lyonel-Feininger-Strasse 28
80807 München (DE)**

(54) **VIBRATION REDUCTION DEVICE**

(57)     This vibration reduction device (5) includes: a counterweight (6) provided to a crankshaft (14) of a Stirling engine (1); and an electric balancer (7) being attached to a crankcase (15) and including a balance weight (73) rotated by an electric motor (74). An inertial force of the counterweight (6) is set to approximately a half of a combined inertial force of pistons (12, 13). Inertial force of balance weight $\times$ L2 = 1/2 $\times$ combined inertial force of pistons $\times$ L1 is satisfied, where L1 denotes a distance between a vibration reduction target position and a rotation center (O1) of the crankshaft (14), and L2 denotes a distance between the vibration reduction target position and a rotation center (O2) of the balance weight (73).

FIG.2

## Description

Technical Field

The present invention relates to a vibration reduction device. Particularly, the present invention relates to improvement in a device for reducing vibrations caused by a reciprocating movement of a piston in a reciprocating engine.

Background Art

Traditionally, there has been proposed a vibration reduction device for reducing vibrations caused by a reciprocating movement of a piston in a reciprocating engine. For example, Patent Literature 1 (hereinafter, referred to as PTL 1) discloses a configuration in which counterweights are provided at front and rear ends of a crankshaft and an eccentric rotation weight, which is driven by a motor, is disposed rearward of the rear end of the crankshaft, for the purpose of reducing an unbalanced moment of an engine.

Citation List

Patent Literature

PTL 1: Japanese Patent Application Laid-Open No. S60-234146 (1985)

Summary of Invention

Technical Problem

However, the vibration reduction device disclosed in PTL 1 includes the motor and the eccentric rotation weight, which are disposed rearward of the rear end of the crankshaft. Therefore, the crankshaft is likely to be long in its longitudinal direction when viewed in the entire device including the engine and the vibration reduction device. In addition, PTL 1 does not concretely disclose settings specified as to, e.g., masses of the counterweight and the eccentric rotation weight. Thus, the vibration reduction device disclosed in PTL 1 lacks practicality.

The present invention was made in view of the above circumstances, and has an object to provide a vibration reduction device with high practicality.

Solution to Problem

In order to attain the object, a solution according to one aspect of the present invention provides a vibration reduction device including: a counterweight provided to a crankshaft driven by a reciprocating movement of a piston of a reciprocating engine; and a balancer including a balance shaft driven independently from the crankshaft and a balance weight that is provided to the balance shaft and is integrally rotatable with the balance shaft. This vibration reduction device is configured such that a center line of the balance shaft and a center line of the crankshaft are substantially in parallel to each other, and a virtual plane including the center lines is substantially perpendicular to a center line of the piston.

According to the one aspect of the present invention, centrifugal forces generated by rotation of the counterweight and rotation of the balance weight occur in a direction for cancelling an inertial force generated by the reciprocating movement of the piston (an inertial force in a direction of the reciprocating movement of the piston). Consequently, it is possible to reduce vibrations in the reciprocating engine. In addition, this vibration reduction device is configured such that a center line of the balance shaft and a center line of the crankshaft are substantially in parallel to each other, and a virtual plane including the center lines is substantially perpendicular to a center line of the piston. Consequently, a length of the crankshaft in its longitudinal direction, viewed in the entire device including the reciprocating engine and the vibration reduction device, can be made shorter (i.e., shorter than that disclosed in PTL 1). Thus, it is possible to enhance the practicality of the vibration reduction device.

A solution according to another aspect of the present invention provides a vibration reduction device including: a counterweight provided to a crankshaft driven by a reciprocating movement of a piston of a reciprocating engine; and a balancer including a balance shaft driven independently from the crankshaft and a balance weight that is provided to the balance shaft and is integrally rotatable with the balance shaft. For this vibration reduction device, an inertial force (= mass × radius of rotation (e.g., radius of rotation about center of gravity of counterweight)) of the counterweight is set at approximately a half of a combined inertial force of the piston. In addition, this vibration reduction device is configured such that a mass of the balance weight is set so that the following formula is established: inertial force of

balance weight $\times$ L2 = 1/2 $\times$ combined inertial force of piston $\times$ L1, where L1 denotes a distance between a vibration reduction target position and a rotation center of the crankshaft and L2 denotes a distance between the vibration reduction target position and a rotation center of the balance weight.

In the present invention, a rotation rate of the crankshaft and a rotation rate of the balance shaft are identical to each other (synchronous rotation), so that the above formula is established. Also according to this aspect of the present invention, centrifugal forces generated by rotation of the counterweight and rotation of the balance weight occur in a direction for cancelling an inertial force generated by the reciprocating movement of the piston. Consequently, it is possible to reduce vibrations in the reciprocating engine. Furthermore, since the inertial force of the counterweight (= mass $\times$ radius of rotation), the inertial force of the balance weight (the inertial force specified by the above formula (= mass $\times$ radius of rotation)), the distance between the vibration reduction target position and the rotation center of the crankshaft, and the distance between the vibration reduction target position and the rotation center of the balance weight are specified, it is possible to enhance the practicality of the vibration reduction device.

A direction of the reciprocating movement of the piston is preferably a horizontal direction, and the balancer is preferably attached to an upper surface of a crankcase in which the crankshaft is accommodated.

With this configuration, vibrations in the reciprocating engine can be reduced. Not only this, the position of the rotation center of the balance weight can be set to be upwardly away from the vibration reduction target position by a predetermined distance. Thus, by setting this distance longer, the balance weight can be made lightweight. In addition, a work for attaching the vibration reduction device to the crankcase is performed from above. Thus, this work can be performed with fine workability.

The balancer preferably includes two balancers disposed on two opposed sides of the crankshaft, respectively, such that the crankshaft is interposed between the two balancers, the two balancers being driven independently from each other, a rotational direction of a balance weight of one of the two balancers being set to be opposite to a rotational direction of the crankshaft, a rotational direction of a balance weight of the other of the two balancers being set to be identical to the rotational direction of the crankshaft.

With this configuration, the balance weights of the balancers can be made lightweight. Consequently, it is easier to handle the balancers, thereby making it possible to simplify a structure for attaching the balancers to the reciprocating engine.

In addition, a rotational power source of the balance shaft and the balance weight in the balancer is an electric motor. Furthermore, the crankshaft is connected to an electricity generator configured to generate electricity by making use of rotation of the crankshaft. Moreover, part of the electricity generated by the electricity generator can be supplied to the electric motor.

According to this configuration, the power source of the electric motor is electricity generated by making use of driving power of the reciprocating engine. Thus, the need for a separate power source (e.g., a commercial power source) is eliminated. Namely, it is possible to generate electricity with use of driving power of the reciprocating engine and to reduce vibrations in the reciprocating engine.

In addition, the reciprocating engine includes a cylinder in which a first piston and a second piston are accommodated, and the first piston and the second piston are configured to perform individual reciprocating movements in the cylinder. Furthermore, rotation of the balance weight is preferably controlled to generate a centrifugal force in a direction for cancelling a resultant force of an inertial force caused by the reciprocating movement of the first piston and an inertial force caused by the reciprocating movement of the second piston.

According to this configuration, it is possible to reduce, in a reciprocating engine in which a first piston and a second piston are accommodated in a single cylinder, vibrations caused by reciprocating movements of these pistons.

Advantageous Effects of Invention

The present invention concretely specifies, for a vibration reduction device for reducing vibrations caused by a reciprocating movement of a piston in a reciprocating engine, a position of a balance shaft or masses and dimensions of components of the vibration reduction device. Consequently, it is possible to enhance the practicality of the vibration reduction device.

Brief Description of Drawings

[FIG. 1] A cross-sectional view illustrating a schematic configuration of a Stirling engine according a first embodiment.
[FIG. 2] A cross-sectional view of the Stirling engine and a vibration reduction device according to the first embodiment, viewed from a direction along a center line of a crankshaft.
[FIG. 3] A cross-sectional view of the Stirling engine according to the first embodiment, viewed from a horizontal direction orthogonal to the center line of the crankshaft.

[FIG. 4] A cross-sectional view of an electric balancer, taken along line IV-IV in FIG. 2.

[FIG. 5] A view illustrating a control system of the electric balancer according to the first embodiment.

[FIG. 6] A view illustrating respective examples of a vibration waveform resulting from a reciprocating movement of a displacer piston, a vibration waveform resulting from a reciprocating movement of a power piston, a synthesized waveform of these vibration waveforms, and a vibration waveform obtained while the vibration reduction device is operating.

[FIG. 7] A view illustrating models of pistons, a crankshaft, a counterweight, and balance weights of the first embodiment.

[FIG. 8] A view illustrating models of a piston, a crankshaft, and balance weights of a comparative example.

[FIG. 9] A cross-sectional view of a Stirling engine and a vibration reduction device according to a second embodiment, viewed from a direction along a center line of a crankshaft.

[FIG. 10] A cross-sectional view of a Stirling engine and a vibration reduction device according to a third embodiment, viewed from a direction along a center line of a crankshaft.

[FIG. 11] A cross-sectional view of a Stirling engine and a vibration reduction device according to a fourth embodiment, viewed from a direction along a center line of a crankshaft.

[FIG. 12] A view illustrating a control system of an electric balancer according to a fifth embodiment.

[FIG. 13] A view illustrating a schematic configuration of an electricity generating system according to a sixth embodiment.

[FIG. 14] A cross-sectional view of an internal combustion engine and a vibration reduction device according to a seventh embodiment, viewed from a direction along a center line of a crankshaft.

[FIG. 15] A cross-sectional view of an internal combustion engine according to the seventh embodiment, viewed from a horizontal direction orthogonal to a center line of a crankshaft.

[FIG. 16] A cross-sectional view of an internal combustion engine and a vibration reduction device according to an eighth embodiment, viewed from a direction along a center line of a crankshaft.

[FIG. 17] A view illustrating a control system of an electric balancer according to a ninth embodiment.

Description of Embodiments

Next, with reference to the drawings, the following will describe a plurality of embodiments of the present invention.

(First embodiment)

Firstly, a first embodiment will be described. The present embodiment will discuss a case where the present invention is applied to a Stirling engine including a single cylinder in which a displacer piston and a power piston perform individual reciprocating movements in a top-and-bottom direction.

- Schematic configuration of Stirling engine -

Prior to description of a vibration reduction device, which is a feature of the present embodiment, a schematic configuration of a Stirling engine will be described.

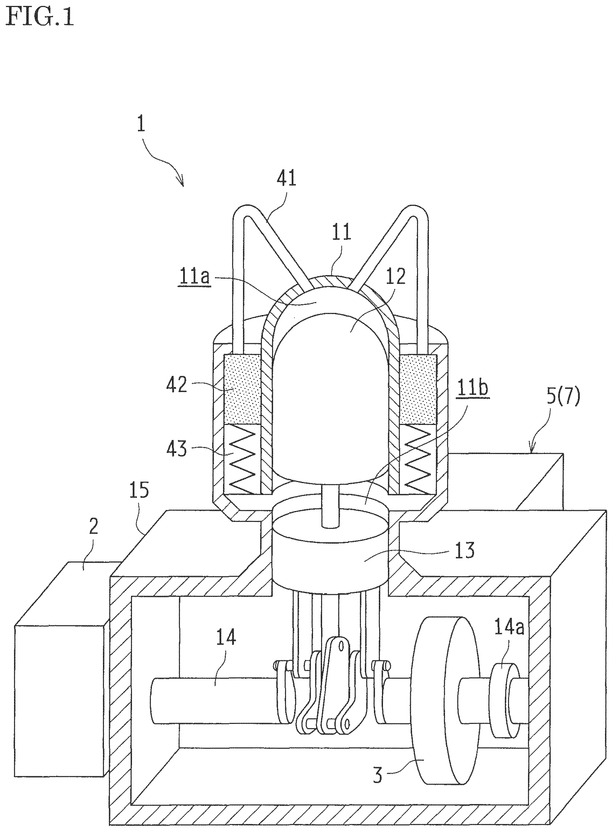

FIG. 1 is a cross-sectional view illustrating a schematic configuration of a Stirling engine 1 according to the present embodiment. As illustrated in FIG. 1, the Stirling engine 1 includes a cylinder 11 accommodating, its inside, a displacer piston (first piston) 12 and a power piston (second piston) 13 that are reciprocally movable individually. The displacer piston 12 is disposed above the power piston 13. Consequently, an inner space of the cylinder 11 is partitioned into a plurality of spaces. A space above the displacer piston 12 is an expansion space (high-temperature space) 11a. Meanwhile, a space below the displacer piston 12 (i.e., a space between the displacer piston 12 and the power piston 13) is a compression space (low-temperature space) 11b.

Below the cylinder 11, a crankcase 15 is disposed. The crankcase 15 includes, in its inside, a crankshaft 14. The displacer piston 12 and the power piston 13 are connected to the crankshaft 14. Specifically, the displacer piston 12 and the power piston 13 are connected to the crankshaft 14 with their respective phases being shifted from each other by a predetermined angle (e.g., 90° around the crankshaft 14) (i.e., with a position at which the displacer piston 12 is connected to the crankshaft 14 via a rod and a position at which the power piston 13 is connected to the crankshaft 14 via the rod being shifted from each other by the predetermined angle in a rotational direction of the crankshaft 14) via a Scotch-yoke mechanism (not illustrated).

In addition, the crankshaft 14 has one end (the right end in FIG. 1) to which a flywheel 3 is attached such that the flywheel 3 and the crankshaft 14 are integrally rotatable. The crankshaft 14 has the other end (the left end in FIG.

1) extending to the outside of the crankcase 15 and being connected to an electricity generator 2.

The cylinder 11 is connected to a heater 41 in which a working gas (e.g., a helium gas) flows. The heater 41 has one end communicating with the expansion space 11a. The heater 41 has the other end communicating with a regenerator 42. The regenerator 42 communicates with a cooler 43. The cooler 43 communicates with the compression space 11b. The heater 41 receives heat such as factory exhaust heat and/or heat from biomass combustion, and heats the working gas with the heat thus received. Meanwhile, a coolant flows inside the cooler 43 such that the coolant can exchange heat with the working gas. As a result of the heat exchange, the working gas is cooled.

The regenerator 42 and the cooler 43 are disposed to an outer periphery of the cylinder 11. The regenerator 42 includes a circular cylinder that is concentric with the cylinder 11 but is different in diameter from the cylinder 11. In a space between the circular cylinder and the cylinder 11, a matrix material that is a wire net made of, e.g., austenite stainless steel or brass is filled. The working gas passes through the matrix material, and then flows into the heater 41 or the cooler 43. The working gas absorbs heat from the matrix material when the working gas passes through the regenerator 42 on the way from the cooler 43 to the heater 41. Meanwhile, the working gas transmits heat to the matrix material when the working gas passes through the regenerator 42 on the way from the heater 41 to the cooler 43.

With such a configuration, in the Stirling engine 1, the displacer piston 12 and the power piston 13 perform reciprocating movements according to the volume change of the working gas caused by expansion of the working gas in the expansion space 11a or compression of the working gas in the compression space 11b. Consequently, the crankshaft 14 is rotatably driven. Then, the rotation force of the crankshaft 14 is transmitted to the electricity generator 2, so that the electricity generator 2 generates electricity. At the time of starting the Stirling engine 1, the electricity generator 2 is used as an electric motor for rotating the crankshaft 14.

- Configuration of vibration reduction device -

Next, the following will describe a configuration of a vibration reduction device 5, which is a feature of the present embodiment. The vibration reduction device 5 reduces vibrations caused by reciprocating movements of the displacer piston 12 and the power piston 13. Particularly, the vibration reduction device 5 reduces vibrations generated in a direction of the reciprocating movements of the displacer piston 12 and the power piston 13 (in the present embodiment, a top-and-bottom direction).

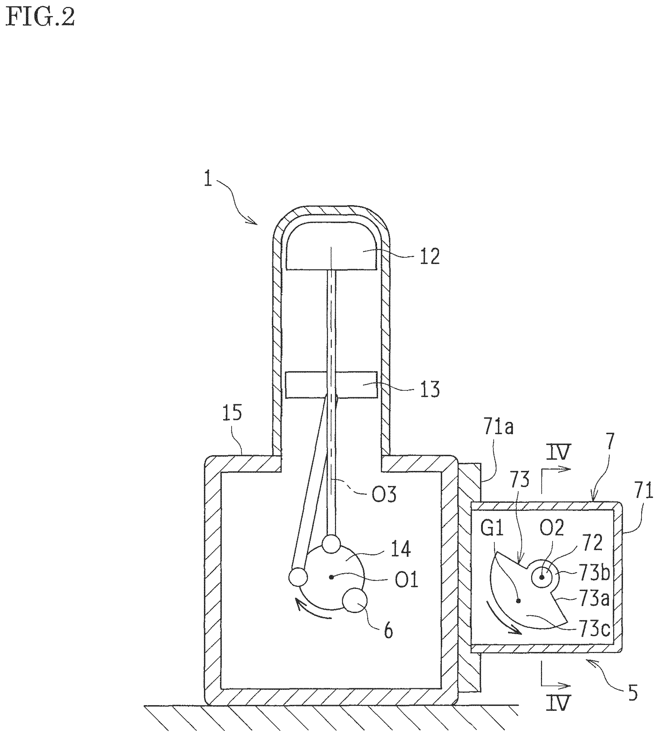

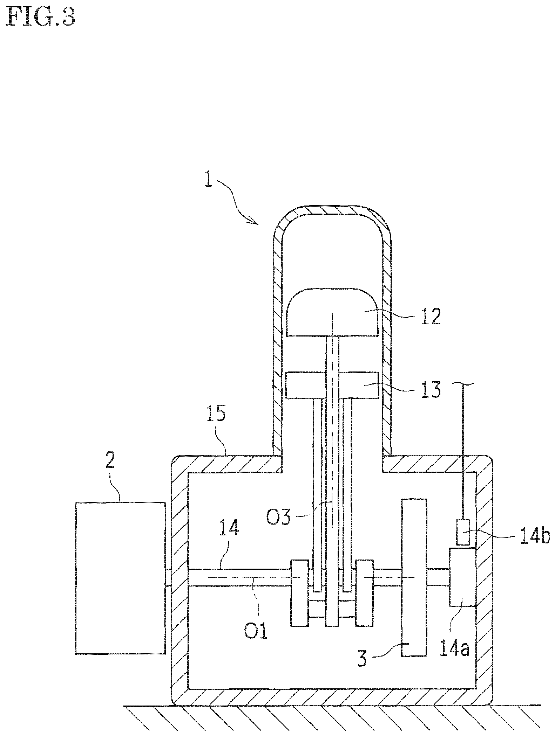

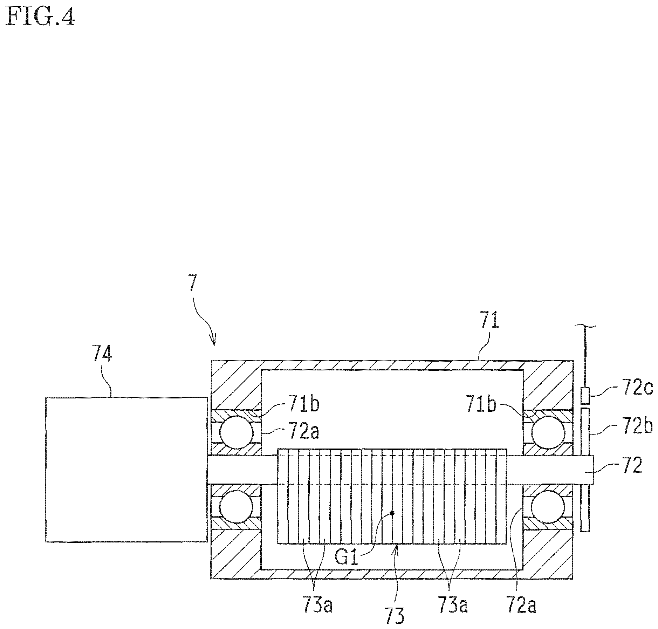

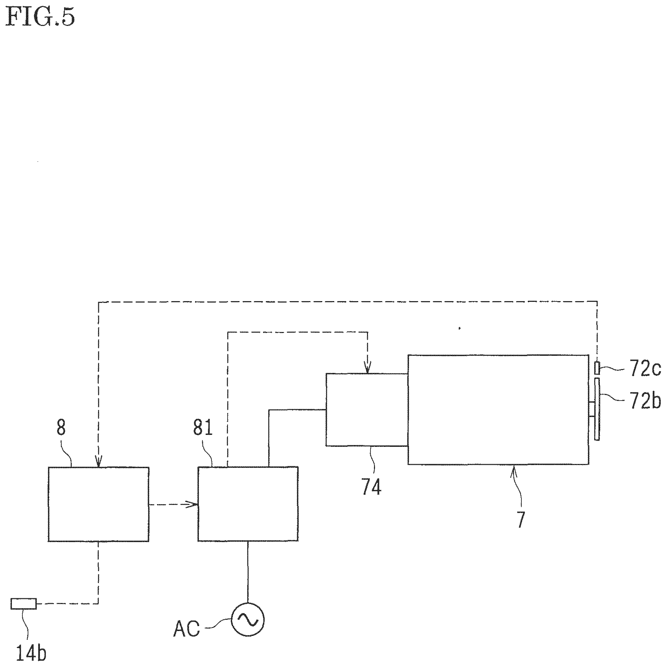

FIG. 2 is a cross-sectional view of the Stirling engine 1 and the vibration reduction device 5 according to the present embodiment, viewed from a direction along a center line O1 of the crankshaft 14. FIG. 3 is a cross-sectional view of the Stirling engine 1, viewed from a horizontal direction orthogonal to the center line O1 of the crankshaft 14. FIG. 4 is a cross-sectional view of an electric balancer 7 provided to the vibration reduction device 5, taken along line IV-IV in FIG. 2. FIG. 5 is a view illustrating a control system of the electric balancer 7.

The vibration reduction device 5 includes a counterweight 6 attached to the crankshaft 14 and the electric balancer 7.

The counterweight 6 is a weight integrally formed with the crankshaft 14 at a position deviated from the center line O1 of the crankshaft 14. In the present embodiment, an inertial force (= mass × radius of rotation) of the counterweight 6 is set at approximately a half of a combined inertial force of the pistons 12 and 13. For example, provided that a mass of each of the pistons 12 and 13 is 20 kg, strokes of the pistons 12 and 13 are identical to each other, a phase difference between the pistons 12 and 13 is 90°, a mass of the counterweight 6 is set at approximately 14 kg (= $1/2 \times 20 \times \sqrt{2}$). These values are not limited to those indicated above.

A position at which the counterweight 6 is disposed is set at a position allowing the counterweight 6 to generate a centrifugal force in a direction for cancelling inertial forces caused by reciprocating movements of the displacer piston 12 and the power piston 13 (i.e., a resultant force of inertial forces of the displacer piston 12 and the power piston 13 in the direction of their reciprocating movements, that is, a resultant force of the inertial forces of the displacer piston 12 and the power piston 13).

Specifically, provided that the masses of the displacer piston 12 and the power piston 13 are identical to each other, the strokes of the pistons 12 and 13 are identical to each other, and a phase difference between the pistons 12 and 13 (a phase difference in the rotational direction between the positions at which the pistons 12 and 13 are respectively connected to the crankshaft 14) is 90°, the position at which the counterweight 6 is disposed is set to be opposite to a position intermediate of the phase difference (i.e., opposite to a position having a phase shifted by 45° from the displacer piston 12 and from the power piston 13). Namely, as illustrated in FIG. 2, when the displacer piston 12 is at top dead center and the power piston 13 is at a position 90° before top dead center, the position of the counterweight 6 is set to be opposite to a position 45° before top dead center (i.e., set to be a position 135° after top dead center). Provided that a ratio between the mass of the displacer piston 12 and the mass of the power piston 13 is 2:1, the strokes of the pistons 12 and 13 are identical to each other, and the phase difference between the pistons 12 and 13 is 90°, the position at which the counterweight 6 is disposed is set to be opposite to a position shifted by 26.6° from the position at which the displacer piston 12 is connected to the crankshaft 14 (i.e., opposite to a position shifted by 26.6° from the position at which the power piston 13 is connected to the crankshaft 14). Consequently, an overbalance ratio obtained as a result of the provision of the counterweight 6 is 50 percent (the overbalance ratio is a parameter corresponding to a proportion of an unbalance force obtained as a result of the provision of the counterweight 6 with respect to a combined inertial force of the pistons 12 and 13 (an overbalance ratio observed when no unbalance force derived from the counterweight 6 is generated is 0 percent, and an overbalance ratio observed when an unbalance force derived from the counterweight 6 is in balance with a combined inertial force of the pistons 12 and 13 is 100 percent)). The position at which the counterweight 6 is disposed may be set, based on an experiment and/or a simulation, at a position to allow the counterweight 6 to cancel the above-described inertial force (inertial forces generated by reciprocating movements of the displacer piston 12 and the power piston 13).

Next, the following will describe the electric balancer 7. The electric balancer 7 is driven independently from the crankshaft 14, and is attached to a side surface (the right side surface in FIG. 2) of the crankcase 15 of the Stirling engine 1. The electric balancer 7 includes a balancer case 71, a balance shaft 72, a balance weight 73, and an electric motor 74.

The balancer case 71 is a metal case shaped in a substantial rectangular parallelepiped, and has one surface to which a flange 71a is attached. The flange 71a is detachably attached to a side surface of the crankcase 15 via a fixing means such as a bolt. Namely, the electric balancer 7 according to the present embodiment is post-attachable to the Stirling engine 1. As illustrated in FIG. 4, the balancer case 71 has support holes 71b for rotatably supporting the balance shaft 72.

The balance shaft 72 is rotatably supported at the support holes 71b in the balancer case 71 via radial bearings 72a. The balance shaft 72 has one end (the left side in FIG. 4) that passes through one of the support holes 71b and is connected to the output shaft of the electric motor 74. Meanwhile, the balance shaft 72 has the other end (the right side in FIG. 4) that passes through the other of the support holes 71b. In addition, the other end of the balance shaft 72 has a tip to which a balance shaft rotor 72b for detecting a rotational phase of the balance shaft 72 is attached such that the balance shaft rotor 72b and the balance shaft 72 are integrally rotatable. A rotational position detection sensor 72c, which is configured to detect a rotational phase of the balance shaft rotor 72b, is provided to face an outer periphery of the balance shaft rotor 72b. An output signal from the rotational position detection sensor 72c is inputted to a balancer controller 8 (see FIG. 5). In one example, a plurality of protrusions is formed on the outer periphery of the balance shaft rotor 72b along its circumferential direction, and the rotational position detection sensor 72c is an electromagnetic pickup sensor. With this configuration, a pickup signal from the rotational position detection sensor 72c corresponding to a rotational phase of the balance shaft 72 is inputted to the balancer controller 8. Based on this, the rotational phase of the balance shaft 72 (i.e., a relation between a rotational phase of the output shaft of the electric motor 74 and a rotational phase of the balance weight 73) can be obtained. Note that the means for detecting the rotational phase of the balance shaft 72 is not limited to the one described above. Alternatively, various known detection means may be employed.

The balance weight 73 is a stack of a plurality of weight plates 73a. Each of the weight plates 73a is made of a flat, metallic plate material having a support ring portion 73b (see FIG. 2) through which the balance shaft 72 is inserted and a weight portion 73c integrally formed with the support ring portion 73b. A multiple number of such weight plates 73a are stacked. The balance shaft 72 is inserted into the support ring portions 73b of the weight plates 73a. The weight plates 73a are assembled to the balance shaft 72 via keys (not illustrated) such that the weight plates 73a and the balance shaft 72 are integrally rotatable.

In the present embodiment, a mass of the balance weight 73 made of the stack of the plurality of weight plates 73a is set so that the following formula regarding the inertial force of the balance weight 73 is established.

$$\text{Inertial force of balance weight} \times L2 = 1/2 \times \text{combined inertial force of pistons} \times L1 \ ... \ (1)$$

In this formula, L1 denotes a distance between the center line (rotation center) O1 of the crankshaft 14 and a floor surface that is a vibration reduction target position. L2 denotes a distance between a center line (rotation center of the balance weight) O2 of the balance shaft 72 and the floor surface that is the vibration reduction target position. In the present embodiment, these distances L1 and L2 are identical to each other. Configurations in which these distances L1 and L2 are different from each other will be described in the later-described second embodiment.

In addition, as illustrated in FIG. 2, the center line O2 of the balance shaft 72 is at an identical height position to that of the center line O1 of the crankshaft 14 and is in parallel to the center line O1 of the crankshaft 14. The center line O1 of the crankshaft 14 extends in a direction orthogonal to the direction (vertical direction) of the reciprocating movements of the displacer piston 12 and the power piston 13. Thus, the center line O2 of the balance shaft 72 extends in a direction in parallel to the direction orthogonal to the direction of the reciprocating movements of the displacer piston 12 and the power piston 13. Consequently, the center line O2 of the balance shaft 72 and the center line O1 of the crankshaft 14 are substantially in parallel to each other, and a virtual plane including the center lines O1 and O2 is substantially perpendicular to a center line O3 of the pistons 12 and 13. A position at which the balance weight 73 is assembled to the balance shaft 72 is set on a virtual plane in which a center of gravity G1 of the balance weight 73 is orthogonal to the center line O1 of the crankshaft 14 and which includes the center line O3 of the displacer piston 12 and the power piston 13.

The electric motor 74 is an alternating current motor such as an induction motor or a synchronous motor. As described above, the output shaft of the electric motor 74 is connected to the balance shaft 72 so that the output shaft and the balance shaft 72 are integrally rotatable. With this configuration, upon actuation of the electric motor 74, the balance shaft 72 and the balance weight 73 rotate in the balancer case 71 at a speed identical to a rotational speed (rotational angular speed) of the electric motor 74. Thus, the output shaft of the electric motor 74 is directly connected to the balance shaft 72. This eliminates the need for components such as a speed reducer, whereby a simpler configuration and downsizing of the electric balancer 7 can be achieved.

The rotational direction, the rotational speed, and the rotational phase of the balance shaft 72 and the balance weight 73 are adjustable by a rotation instruction signal outputted from the balancer controller 8 to the electric motor 74. Specifically, the balance shaft 72 and the balance weight 73 rotate in a direction (a counterclockwise direction in FIG. 2) opposite to a rotational direction of the crankshaft 14 (a clockwise direction in FIG. 2) at a rotational speed identical to that of the crankshaft 14. Namely, in a similar manner to the counterweight 6, the balance shaft 72 and the balance weight 73 rotate to generate a centrifugal force in a direction for cancelling inertial forces caused by reciprocating movements of the displacer piston 12 and the power piston 13 (i.e., a resultant force of inertial forces of the displacer piston 12 and the power piston 13).

As illustrated in FIG. 3, a crankshaft rotor 14a for detecting a rotational phase of the crankshaft 14 is attached to the crankshaft 14 such that the crankshaft rotor 14a is located outward of the flywheel 3 and is integrally rotatable with the crankshaft 14. A rotational position detection sensor 14b, which is configured to detect a rotational phase of the crankshaft rotor 14a, is provided to face an outer periphery of the crankshaft rotor 14a. An output signal from the rotational position detection sensor 14b is inputted to the balancer controller 8 (see FIG. 5). In one example, in a similar manner to the balance shaft rotor 72b described above, a plurality of protrusions is formed on the outer periphery of the crankshaft rotor 14a along its circumferential direction, and the rotational position detection sensor 14b is an electromagnetic pickup sensor. With this configuration, a pickup signal from the rotational position detection sensor 14b corresponding to a rotational phase of the crankshaft 14 is inputted to the balancer controller 8. Based on the pickup signal, the rotational phase of the crankshaft 14 is obtained. Based on the rotational phase of the crankshaft 14, information such as the positions of the displacer piston 12 and the power piston 13 and the rotational speed of the crankshaft 14 can be calculated. Note that the means for detecting the rotational phase of the crankshaft 14 is not limited to the one described above. Alternatively, various known detection means may be employed.

As illustrated in FIG. 5, a rotation instruction signal from the balancer controller 8 and electricity from an alternating-current power supply AC are supplied to the electric motor 74 via an electric motor amplifier 81.

- Vibration reduction control -

Next, the following will describe control for vibration reduction that is to be performed by the vibration reduction device 5 having the above-described configuration. This control is performed on the electric motor 74 (i.e., control according to a rotation instruction signal outputted to the electric motor 74) for reducing vibrations generated in the direction of the reciprocating movements of the displacer piston 12 and the power piston 13.

First, prior to the first start of the vibration reduction device 5, a relation between a rotational phase of the output shaft of the electric motor 74 and a rotational phase of the balance weight 73 needs to be worked out. Then, a rotational phase of the balance weight 73 obtained as a result of control of the electric motor 74 needs to be set at a position with which the balance weight 73 generates a centrifugal force in a direction for cancelling an inertial force (a resultant force of inertial forces of the displacer piston 12 and the power piston 13) caused by reciprocating movements of the displacer piston 12 and the power piston 13. Namely, if there is a deviation between the rotational phase of the output shaft of the electric motor 74 and the rotational phase of the balance weight 73, it is necessary to set the balancer controller 8 so that the balancer controller 8 outputs a rotation instruction signal in which the deviation is taken into consideration.

For this reason, prior to the first start of the vibration reduction device 5, an output signal from the rotational position detection sensor 72c is inputted to the balancer controller 8. Based on this, the rotational phase of the balance weight 73 is detected, so that the amount of the deviation is figured out. Then, the rotation instruction signal is corrected for the amount of the deviation, and the signal thus corrected is outputted to the electric motor 74.

Thereafter, while the Stirling engine 1 is operating, as illustrated in FIG. 5, an output signal (a rotational phase signal of the crankshaft rotor 14a) from the rotational position detection sensor 14b is inputted to the balancer controller 8. According to this rotational phase signal, information such as a rotational position (rotational phase) and/or a rotational speed of the crankshaft rotor 14 is calculated.

The balancer controller 8 outputs, to the electric motor 74, a rotation instruction signal for causing the balance shaft 72 to rotate so that a centrifugal force for cancelling inertial forces generated by reciprocating movements of the displacer piston 12 and the power piston 13 (i.e., a resultant force of the inertial forces of the displacer piston 12 and the power piston 13) is generated by rotation of the balance weight 73. More specifically, according to the rotational phase of the crankshaft rotor 14a obtained from the output signal from the rotational position detection sensor 14b, feedback control of the electric motor 74 (feedback control of the rotation instruction signal) is performed.

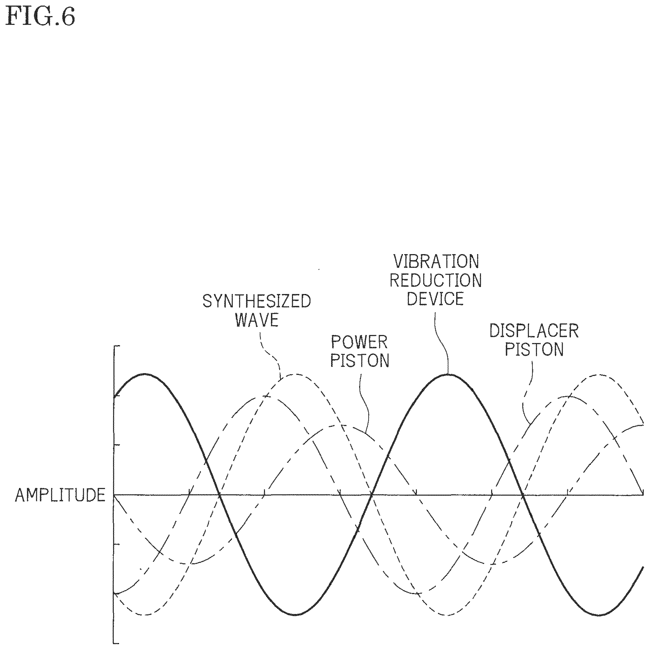

FIG. 6 is a view illustrating respective examples of a vibration waveform resulting from a reciprocating movement of the displacer piston 12 (indicated by an alternate long and short dashes line), a vibration waveform resulting from a reciprocating movement of the power piston 13 (indicated by an alternate long and two short dashes line), a synthesized waveform of these vibration waveforms (indicated by a broken line), and a vibration waveform obtained while the vibration reduction device 5 is operating (indicated by a solid line).

As described above, the displacer piston 12 and the power piston 13 are connected to the crankshaft 14 with their phases shifted from each other by a predetermined angle (for example, 90° around the crankshaft 14). Therefore, the vibration waveform resulting from the reciprocating movement of the displacer piston 12 (indicated by the alternate long and short dashes line) and the vibration waveform resulting from the reciprocating movement of the power piston 13 (indicated by the alternate long and two short dashes line) appear as waveforms whose phases are shifted from each other by the predetermined angle. To the synthesized waveform (indicated by the broken line) of these vibration waveforms, the vibration reduction device 5 generates a vibration waveform (indicated by the solid line) having an opposite phase to the synthesized waveform (i.e., as a result of the feedback control of the rotation instruction signal, the vibration reduction device 5 generates the vibration waveform having the opposite phase). Consequently, it is possible to significantly reduce vibrations in the direction (top-and-bottom direction) of the reciprocating movements of the displacer piston 12 and the power piston 13 in the Stirling engine 1.

The balance shaft 72 and the balance weight 73 rotate in a direction opposite to a rotational direction of the crankshaft 14. Namely, the balance shaft 72 and the balance weight 73 rotate in a direction opposite to a rotational direction of the counterweight 6. In addition, the counterweight 6 and the balance weight 73 are disposed in respective positions (phases) in which the counterweight 6 and the balance weight 73 generate centrifugal forces for cancelling inertial forces generated by reciprocating movements of the displacer piston 12 and the power piston 13. Thus, when viewed in a direction (horizontal direction) orthogonal to the direction of the reciprocating movements of the displacer piston 12 and the power piston 13, the phases of the counterweight 6 and the balance weight 73 are opposite to each other. Namely, when the counterweight 6 is positioned at the right side (90° after top dead center) in FIG. 2, the balance weight 73 is positioned at the left side in FIG. 2. Meanwhile, when the counterweight 6 is positioned at the left side (90° before top dead center) in FIG. 2, the balance weight 73 is positioned at the right side in FIG. 2. Consequently, vibrations caused by the counterweight 6 in the horizontal direction and vibrations caused by the balance weight 73 in the horizontal direction cancel each other. Consequently, the vibrations in the horizontal direction can also be reduced.

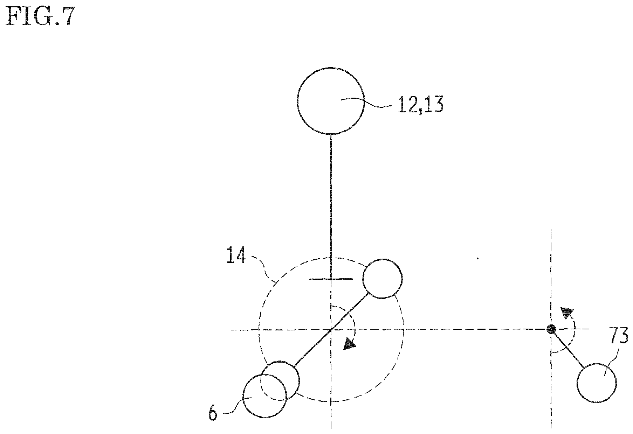

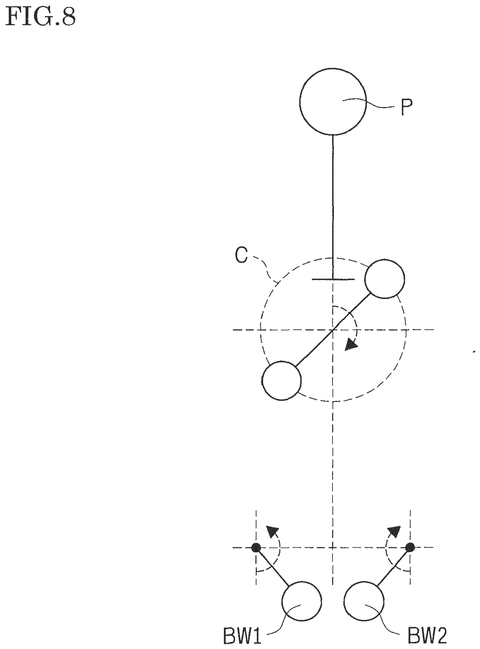

FIG. 7 is a view illustrating models of the piston 12, 13 (in FIG. 7, the displacer piston 12 and the power piston 13 are expressed as a single piston 12, 13 for convenience of explanation), the crankshaft 14, the counterweight 6, and the balance weight 73 according to the present embodiment. FIG. 8 is a view illustrating models of a piston P, a crankshaft C, and balance weights BW1 and BW2 of a comparative example that is a known technique.

The comparative example shown in FIG. 8 is a two-shaft type vibration reduction device including the two balance weights BW1 and BW2 configured to rotate in directions opposite to each other. A mass of each of the balance weights BW1 and BW2 is set at a half of a mass of the piston P. The two balance weights BW1 and BW2 are configured to generate a centrifugal force for cancelling an inertial force generated by a reciprocating movement of the piston P. Vibrations in a direction orthogonal to a direction of the reciprocating movement of the piston P are canceled by the balance weights BW1 and BW2 rotating in opposite directions. However, this comparative example requires two vibration reduction devices, which leads not only to an increase in production cost but also to upsizing of the entire device including the engine and the vibration reduction devices.

Meanwhile, the configuration of the present embodiment illustrated in FIG. 7 can cancel inertial forces generated by reciprocating movements of the pistons 12 and 13 only by the single vibration reduction device 5. In addition, this configuration can also reduce vibrations in a direction orthogonal to the reciprocating movements of the pistons 12 and 13.

As described above, according to the present embodiment, centrifugal forces generated by rotation of the counterweight 6 and rotation of the balance weight 73 occur in a direction for cancelling inertial forces generated by reciprocating movements of the displacer piston 12 and the power piston 13. Consequently, it is possible to significantly reduce vibrations in the direction (top-and-bottom direction) of the reciprocating movements of the displacer piston 12 and the power piston 13 in the Stirling engine 1.

Furthermore, as described above, according to the present embodiment, the center line O2 of the balance shaft 72 and the center line O1 of the crankshaft 14 are substantially in parallel to each other, and the virtual plane including the center lines O1 and O2 is substantially perpendicular to the center line O3 of the pistons 12 and 13. Consequently, a length of the crankshaft 14 in its longitudinal direction, viewed in the entire device including the Stirling engine 1 and the vibration reduction device 5, can be made shorter (i.e., shorter than that disclosed in PTL 1). Thus, it is possible to enhance the practicality of the vibration reduction device 5.

(Second embodiment)

Next, a second embodiment will be described. In the present embodiment, the present invention is applied to a Stirling engine 1 including a single cylinder in which a displacer piston 12 and a power piston 13 perform individual reciprocating movements in a horizontal direction. Except for those described above, the configuration and operation of the present embodiment are similar to those of the first embodiment described above. Thus, the description here mainly deals with differences between the present embodiment and the first embodiment.

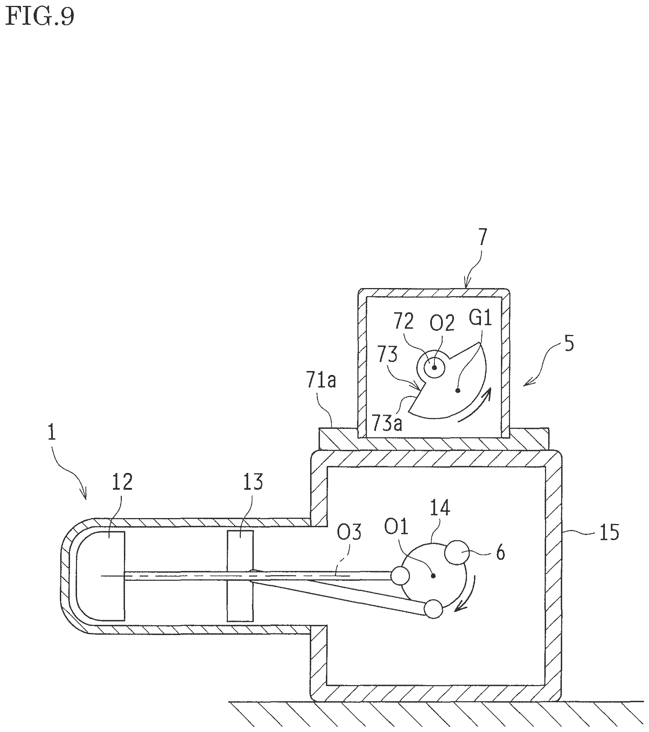

FIG. 9 is a cross-sectional view of the Stirling engine 1 and a vibration reduction device 5 according to the present embodiment, viewed from a direction along a center line O1 of a crankshaft 14.

An electric balancer 7 of the present embodiment is attached to an upper surface of a crankcase 15.

Also in the present embodiment, an inertial force (= mass × radius of rotation) of the counterweight 6 is set at approximately a half of a combined inertial force of the pistons 12 and 13. In addition, a position at which the counterweight 6 is disposed is set at a position at which the counterweight 6 generates a centrifugal force in a direction for cancelling inertial forces generated by reciprocating movements of the displacer piston 12 and the power piston 13.

A center line O2 of a balance shaft 72 of the electric balancer 7 is located vertically above a center line O1 of the crankshaft 14 and is in parallel to the center line O1 of the crankshaft 14. The center line O1 of the crankshaft 14 extends in a direction orthogonal to a direction (horizontal direction) of the reciprocating movements of the displacer piston 12 and the power piston 13. Thus, the center line O2 of the balance shaft 72 extends in a direction in parallel to a horizontal direction orthogonal to the direction of the reciprocating movements of the displacer piston 12 and the power piston 13. Consequently, the center line O2 of the balance shaft 72 and the center line O1 of the crankshaft 14 are substantially in parallel to each other, and a virtual plane including the center lines O1 and O2 is substantially perpendicular to a center line O3 of the pistons 12 and 13. A position (viewed in a direction along the center line O2 of the balance shaft 72) at which the balance weight 73 is assembled to the balance shaft 72 is set on a virtual plane in which a center of gravity G1 of the balance weight 73 is orthogonal to the center line O1 of the crankshaft 14 and which includes the center line O3 of the displacer piston 12 and the power piston 13.

In addition, as a feature of the balance weight 73 of the present embodiment, a mass of the balance weight 73 is set so that the following formula regarding an inertial force of the balance weight 73 is established, in a similar manner to the first embodiment.

Inertial force of balance weight × L2 = 1/2 × combined inertial force of pistons × L1 ... (1). L1 denotes a distance between the center line O1 of the crankshaft 14 and a floor surface that is a vibration reduction target position. L2 denotes a distance between the center line O2 of the balance shaft 72 and the floor surface that is the vibration reduction target position.

The inertial force of the balance weight 73 is determined according to the formula (1) as above. Therefore, for example, provided that the distance L2 between the center line O2 of the balance shaft 72 and the floor surface is twice the distance L1 between the center line O1 of the crankshaft 14 and the floor surface, the inertial force of the balance weight 73 is approximately one fourth of the combined inertial force of the pistons.

Except for those described above, the configuration and operation of the present embodiment are similar to those of the first embodiment described above.

According to the present embodiment, the inertial force of the counterweight 6 is set at approximately a half of the combined inertial force of the pistons 12 and 13, as described above. In addition, the inertial force of the balance weight 73, the distance L1 between the center line O1 of the crankshaft 14 and the floor surface, and the distance L2 between the center line O2 of the balance shaft 72 and the floor surface are defined so that the formula (1) described above is established. Consequently, in a similar manner to the first embodiment, centrifugal forces generated by rotation of the counterweight 6 and rotation of the balance weight 73 occur in a direction for cancelling inertial forces generated by reciprocating movements of the displacer piston 12 and the power piston 13. Thus, it is possible to significantly reduce vibrations in the direction (horizontal direction) of the reciprocating movements of the displacer piston 12 and the power piston 13 in the Stirling engine 1. Furthermore, it is possible to concretely specify inertial forces and dimensions of components of the vibration reduction device 5 according to the formula (1) described above. Thus, it is possible to enhance the practicality of the vibration reduction device 5. Moreover, according to the formula (1), it is possible to optimize the distance L2 between the center line O2 of the balance shaft 72 and the floor surface. This makes it possible to suppress or reduce a moment caused by rotation of the balance weight 73, thereby enabling stable operation of the Stirling engine 1.

Furthermore, according to the formula (1) described above, a position of a rotation center (the center line O2 of the balance shaft 72) of the balance weight 73 is set to be upwardly away from the floor surface, which is the vibration reduction target position, by a predetermined distance (L2 described above). By setting this distance longer, the balance weight 73 can be made lightweight. In addition, a work for attaching the vibration reduction device 5 to the crankcase 15 is performed from above. Thus, this work can be performed with fine workability.

Moreover, also in the present embodiment, a length of the crankshaft 14 in its longitudinal direction, viewed in the entire device including the Stirling engine 1 and the vibration reduction device 5, can be made further shorter. Thus, it is possible to enhance the practicality of the vibration reduction device 5.

(Third embodiment)

Next, a third embodiment will be described. The present embodiment is different from the first embodiment in the number of electric balancers. Except for those described above, the configuration and operation of the present embodiment are similar to those of the first embodiment described above. Thus, the description here also mainly deals with differences between the present embodiment and the first embodiment.

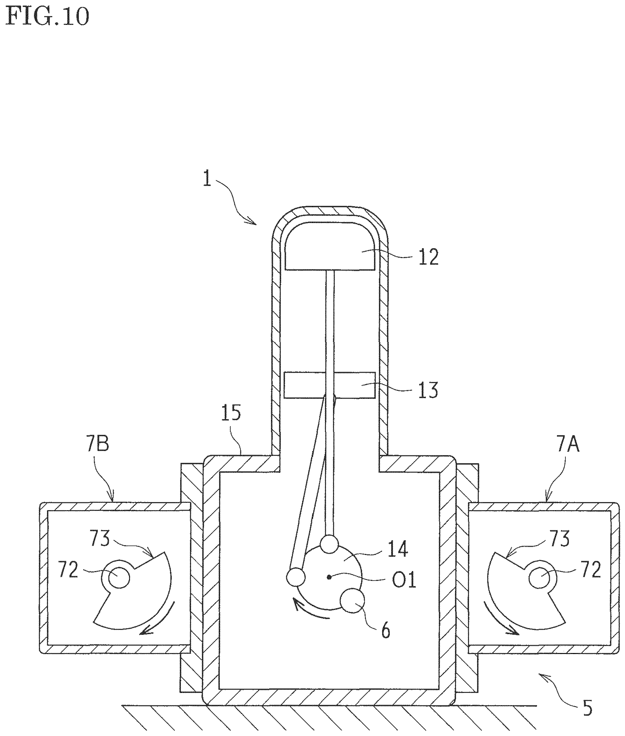

FIG. 10 is a cross-sectional view of a Stirling engine 1 and a vibration reduction device 5 according to the present embodiment, viewed from a direction along a center line O1 of a crankshaft 14.

The vibration reduction device 5 according to the present embodiment includes two electric balancers 7A and 7B. The electric balancers 7A and 7B are respectively attached to two side surfaces of the crankcase 15 on the right and left sides. Each of the electric balancers 7A and 7B has a configuration similar to that of the first embodiment. Specifically, balance weights 73 of the electric balancers 7A and 7B are rotatable independently from each other by their respective electric motors.

In the present embodiment, the first electric balancer 7A, which is one of the two electric balancers, rotates in a direction (a counterclockwise direction in FIG. 10) opposite to a rotation direction (a clockwise direction in FIG. 10) of the crankshaft 14 at a rotational speed identical to that of the crankshaft 14, in a similar manner to the above-described embodiments. Meanwhile, the second electric balancer 7B, which is the other of the two electric balancers, rotates in a direction (the clockwise direction in FIG. 10) identical to the rotation direction of the crankshaft 14 at a rotational speed identical to that of the crankshaft 14. Specifically, when viewed in a direction (horizontal direction) orthogonal to a direction of reciprocating movements of the displacer piston 12 and the power piston 13, a phase of a rotational position of the balance weight 73 of the first electric balancer 7A is opposite to a phase of a rotational position of the balance weight 73 of the second electric balancer 7B. Namely, when the balance weight 73 of the first electric balancer 7A is positioned at the right side in FIG. 10, the balance weight 73 of the second electric balancer 7B is positioned at the left side in FIG. 10. Meanwhile, when the balance weight 73 of the first electric balancer 7A is positioned at the left side in FIG. 10, the balance weight 73 of the second electric balancer 7B is positioned at the right side in FIG. 10. Consequently, it is possible to reduce vibrations in the horizontal direction caused by rotation of the balance weights 73 in the Stirling engine 1.

In the present embodiment, inertial forces of the balance weights 73 of the electric balancers 7A and 7B are set so that the following formula is established.

$$\text{Inertial force of one balance weight} \times L2 = 1/4 \times \text{combined inertial force of pistons} \times L1 \ ... \ (2)$$

In a case where the sum of the inertial forces of the balance weights 73 is assumed as one inertial force, the formula (1) described above is established.

The electric balancers 7A and 7B are controlled individually. Specifically, electric motors of the electric balancers 7A and 7B are supplied with a rotation instruction signal for rotating balance shafts 72 so that centrifugal forces for cancelling inertial forces generated by reciprocating movements of the displacer piston 12 and the power piston 13 are generated by rotation of the balance weights 73. Namely, feedback control of the electric motors 74 is performed so that the balance weights 73 are located at positions at which phases of the balance weights 73 are opposite to a rotational phase of a crankshaft rotor obtained from an output signal from a rotational position detection sensor.

Also in the present embodiment, similar effects to those in the first embodiment can be achieved.

(Fourth embodiment)

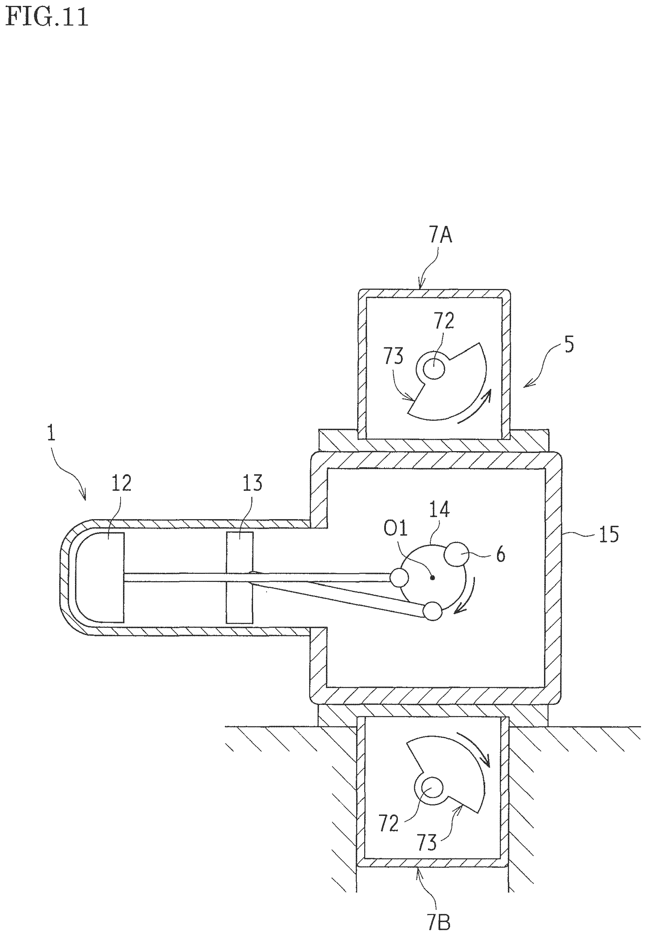

Next, a fourth embodiment will be described. As illustrated in FIG. 11, in the present embodiment, a Stirling engine 1 in which a displacer piston 12 and a power piston 13 perform individual reciprocating movements in a horizontal direction includes a vibration reduction device 5 including two electric balancers 7A and 7B, in a similar manner to the third embodiment described above. The electric balancers 7A and 7B are attached to upper and lower surfaces of the crankcase 15, respectively. Each of the electric balancers 7A and 7B has a configuration similar to that of the first embodiment. Except for those described above, the configuration and operation of the present embodiment are similar to those of the third embodiment described above. Inertial forces of balance weights 73 of the electric balancers 7A and 7B are set so that the formula (2) described above is established. In a case where the sum of the inertial forces of the balance weights 73 is assumed as one inertial force, the formula (1) described above is established.

Also in the present embodiment, it is possible to reduce vibrations (vibrations in a top-and-bottom direction) caused by rotation of the balance weights 73 in the Stirling engine 1, in a similar manner to the third embodiment.

(Fifth embodiment)

Next, a fifth embodiment will be described. The present embodiment is different from the first embodiment in a power source of an electric balancer 7. Except for those described above, the configuration and operation of the present embodiment are similar to those of the first embodiment described above. Thus, the description here also mainly deals with differences between the present embodiment and the first embodiment.

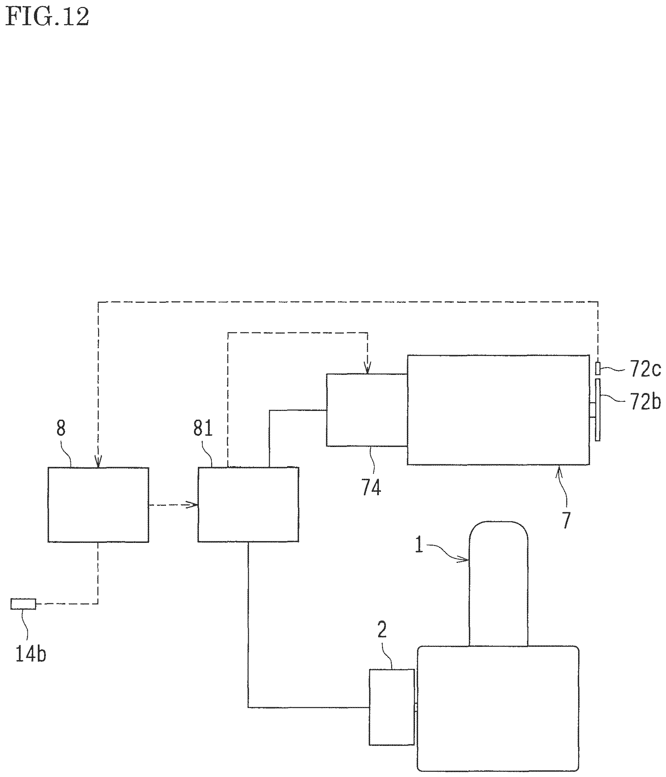

FIG. 12 is a view illustrating a control system of an electric balancer 7 according to the present embodiment. As illustrated in FIG. 12, a power source of the electric balancer 7 of the present embodiment is an electricity generator 2 (described above), instead of an alternating-current power supply AC. Namely, an electric motor 74 of the electric balancer 7 is driven by electricity generated by the electricity generator 2 as a result of operation of the Stirling engine 1. Except for those described above, the configuration and operation of the present embodiment are similar to those of the first embodiment described above.

According to the present embodiment, the power source of the electric motor 74 of the electric balancer 7 is electricity generated with use of driving power of the Stirling engine 1. Thus, the need for a separate power source (e.g., a commercial power source) is eliminated. Namely, it is possible to generate electricity by use of driving power of the Stirling engine 1 and to reduce vibrations in the Stirling engine 1.

Note that the configuration of the present embodiment (the configuration in which the electricity generator 2 is used as the power source of the electric balancer 7) is applicable also to the second, third, and fourth embodiments.

(Sixth embodiment)

Next, a sixth embodiment will be described. In the present embodiment, the present invention is applied to an electricity generating system including a plurality of Stirling engines 1 and a plurality of electricity generators 2.

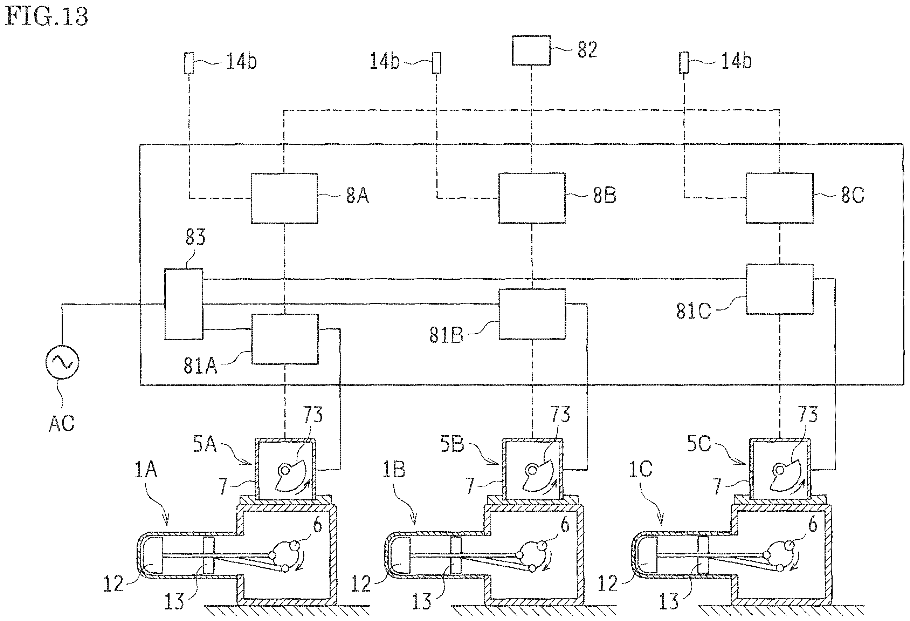

FIG. 13 is a view illustrating a schematic configuration of an electricity generating system according to the present embodiment. As illustrated in FIG. 13, the electricity generating system of the present embodiment includes three Stirling engines, that is, first, second, and third Stirling engines 1A, 1B, and 1C. In addition, the Stirling engines 1A, 1B, and 1C are connected to first, second, and third electricity generators (not illustrated), respectively. Specifically, power generation in the first electricity generator is performed by the first Stirling engine 1A, power generation in the second electricity generator is performed by the second Stirling engine 1B, and power generation in the third electricity generator is performed by the third Stirling engine 1C. In addition, the Stirling engines 1A, 1B, and 1C are respectively provided with first, second, and third vibration reduction devices 5A, 5B, and 5C, each of which has a similar configuration to that of the second embodiment.

For the vibration reduction devices 5A, 5B, and 5C, balancer controllers 8A, 8B, and 8C and electric motor amplifiers 81A, 81B, and 81C are provided, respectively. Thus, electric motors of the first, second, and third vibration reduction devices 5A, 5B, and 5C are controlled individually. The electricity generating system according to the present embodiment is configured as above so that, in a case where there is a difference in power generation amount between the first to third electricity generators, vibrations caused by operation of the Stirling engines 1A, 1B, and 1C can be reduced individually according to the power generation amounts. Note that, in FIG. 13, the reference sign "82" indicates an operation unit, and the reference sign "83" indicates a power distribution board.

With the configuration of the present embodiment, each of the Stirling engines 1A, 1B, and 1C can achieve similar effects to those in the embodiments described above.

Note that any of the configurations (the configurations of the Stirling engines 1 and the vibration reduction devices 5) of the first, third, fourth, and fifth embodiments is also applicable to the electricity generating system according to the present embodiment.

(Seventh embodiment)

Next, a seventh embodiment will be described. The present embodiment will discuss a case where the present invention is applied to an internal combustion engine (e.g., a diesel engine) including a single cylinder in which a single piston performs a reciprocating movement in a top-and-bottom direction.

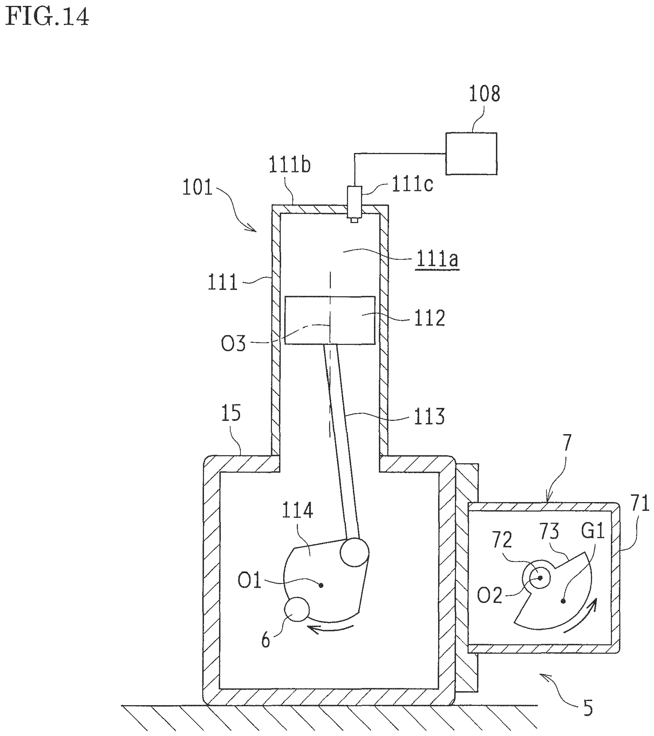

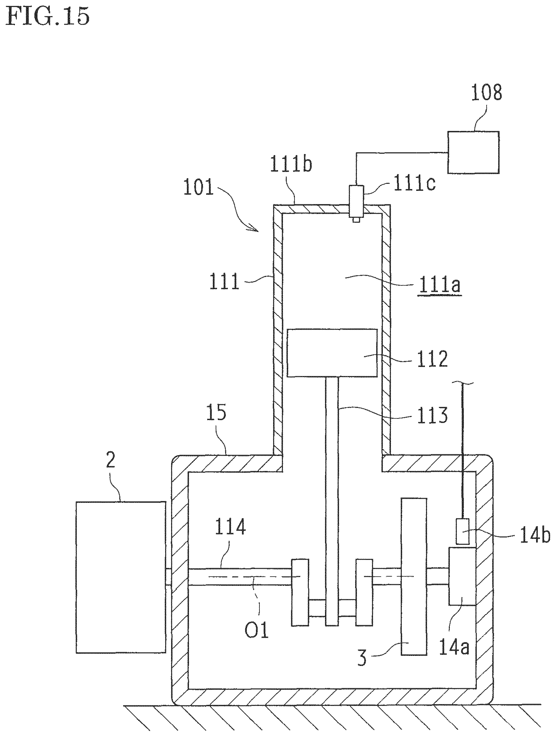

FIG. 14 is a cross-sectional view of an internal combustion engine 101 and a vibration reduction device 5 according to the present embodiment, viewed from a direction along a center line O1 of a crankshaft 114. FIG. 15 is a cross-sectional view of the internal combustion engine 101 according to the present embodiment, viewed from a horizontal direction orthogonal to the center line O1 of the crankshaft 114.

As illustrated in FIGs. 14 and 15, the internal combustion engine 101 includes a cylinder 111 including, in its inside, a piston 112 such that the piston 112 is reciprocally movable. In addition, the internal combustion engine 101 includes a combustion chamber 111a which is an upper space above the piston 112 and in which an air-fuel mixture is combusted. The piston 112 is connected to the crankshaft 114 via a connecting rod 113. To a cylinder head 111b, an injector 111c for injecting a fuel into the cylinder is attached. The fuel injection from the injector 111c is controlled by an engine controller 108.

The present embodiment also includes the vibration reduction device 5 including, in a similar manner to that of the first embodiment, a counterweight 6 attached to the crankshaft 114 and an electric balancer 7.

The counterweight 6 of the present embodiment is also a weight integrally formed with the crankshaft 114 at a position deviated from the center line O1 of the crankshaft 114. An inertial force (= mass $\times$ radius of rotation) of the counterweight 6 is set at approximately a half of an inertial force of the piston 112.

The reciprocating engine of the present embodiment is the internal combustion engine 101 including the single piston 112. Therefore, a position at which the counterweight 6 is disposed is set at a position opposite to (i.e., a position shifted in phase by 180° from) the position at which the connecting rod 113 is connected to the crankshaft 114. Thus, the counterweight 6 is configured to generate a centrifugal force in a direction for cancelling an inertial force generated by a reciprocating movement of the piston 112.

Except for those described above, the configuration and operation of the present embodiment are similar to those of the first embodiment described above.

Also in the present embodiment, centrifugal forces generated by rotation of the counterweight 6 and rotation of the balance weight 73 occur in a direction for cancelling an inertial force generated by a reciprocating movement of the piston 112. Consequently, it is possible to significantly reduce vibrations in a direction (top-and-bottom direction) of the reciprocating movement of the piston 112 in the internal combustion engine 101.

In addition, also in the present embodiment, a center line O2 of the balance shaft 72 and a center line O1 of the crankshaft 114 are substantially in parallel to each other, and a virtual plane including the center lines O1 and O2 is substantially perpendicular to a center line O3 of the piston 112. Consequently, a length of the crankshaft 114 in its longitudinal direction, viewed in the entire device including the internal combustion engine 101 and the vibration reduction device 5, can be made shorter. Thus, it is possible to enhance the practicality of the vibration reduction device 5.

(Eighth embodiment)

Next, an eighth embodiment will be described. In the present embodiment, the present invention is applied to an internal combustion engine 101 including a single cylinder in which a piston 112 performs a reciprocating movement in a horizontal direction. Except for those described above, the configuration and operation of the present embodiment are similar to those of the second and seventh embodiments described above. Thus, the description here mainly deals with differences between the present embodiment and the first and seventh embodiments.

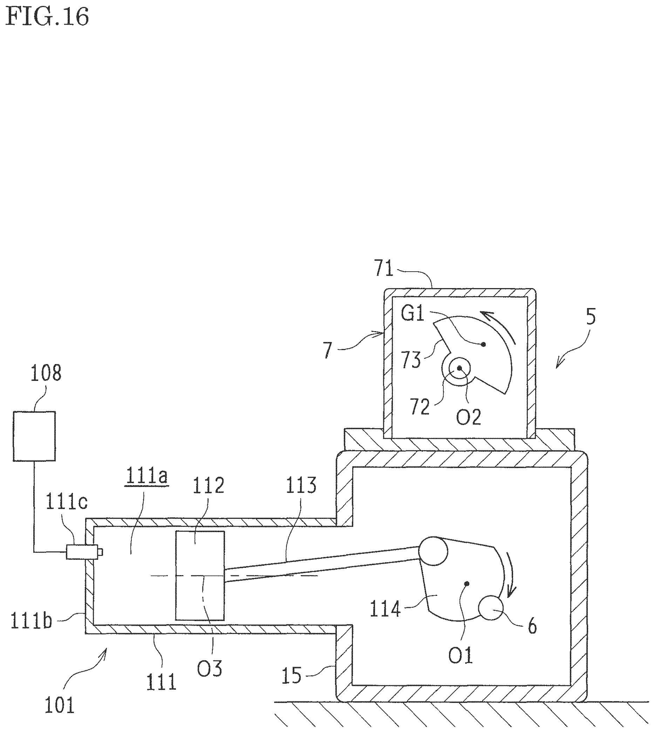

FIG. 16 is a cross-sectional view of an internal combustion engine 101 and a vibration reduction device 5 according to the present embodiment, viewed from a direction along a center line O1 of a crankshaft 114.

An electric balancer 7 of the present embodiment is attached to an upper surface of a crankcase 15.

Specifically, also in the present embodiment, an inertial force (= mass $\times$ radius of rotation) of a counterweight 6 is set at approximately a half of a combined inertial force of the piston 112.

A center line O2 of the balance shaft 72 of the electric balancer 7 is located vertically above a center line O1 of the crankshaft 114 and is in parallel to the center line O1 of the crankshaft 114. The center line O1 of the crankshaft 114 extends in a direction orthogonal to a direction (horizontal direction) of the reciprocating movement of the piston 112. Thus, the center line O2 of the balance shaft 72 extends in a horizontal direction orthogonal to the direction of the reciprocating movement of the piston 112. Consequently, the center line O2 of the balance shaft 72 and the center line O1 of the crankshaft 114 are substantially in parallel to each other, and a virtual plane including the center lines O1 and O2 is substantially orthogonal to a center line O3 of the piston 112. A position at which the balance weight 73 is assembled to the balance shaft 72 is set on a virtual plane in which a center of gravity G1 of the balance weight 73 is orthogonal to the center line O1 of the crankshaft 114 and which includes the center line O3 of the piston 112.

An inertial force of the balance weight 73 is also set so that the formula (1) described above is established. Except for those described above, the configuration and operation of the present embodiment are similar to those of the first embodiment described above.

Also with the configuration of the present embodiment, centrifugal forces generated by rotation of the counterweight 6 and rotation of the balance weight 73 occur in a direction for cancelling an inertial force generated by a reciprocating movement of the piston 112. Consequently, it is possible to significantly reduce vibrations in a direction (horizontal direction) of the reciprocating movement of the piston 112 in the internal combustion engine 101. Furthermore, it is possible to concretely specify inertial forces and dimensions of components of the vibration reduction device 5 according to the formula (1) described above. Thus, it is possible to enhance the practicality of the vibration reduction device 5.

Moreover, a length of the crankshaft 114 in its longitudinal direction, viewed in the entire device including the internal combustion engine 101 and the vibration reduction device 5, can be made shorter. Thus, it is possible to enhance the practicality of the vibration reduction device 5.

Note that the configuration as those of the seventh and eighth embodiments, in which the reciprocating engine is the internal combustion engine 101, is applicable also to any of the third, fourth, fifth, and sixth embodiments.

(Ninth embodiment)

Next, a ninth embodiment will be described. The present embodiment is different from the seventh embodiment in a configuration of a control system of an electric balancer 7. Except for those described above, the configuration and operation of the present embodiment are similar to those of the seventh embodiment described above. Thus, the description here will deal with only a control system of an electric balancer 7.

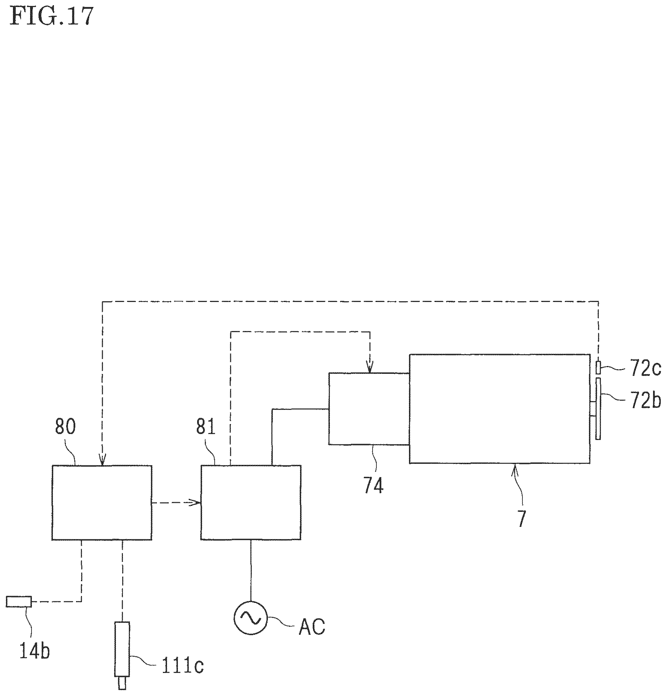

FIG. 17 is a view illustrating the control system of the electric balancer 7 according to the present embodiment. As illustrated in FIG. 17, in the control system of the present embodiment, the function of the balancer controller 8 (described above) and the function of the engine controller 108 (described above) are integrated into a single controller 80. Specifically, according to this configuration, the controller 80 transmits a rotation instruction signal to an electric motor 74 and a fuel injection instruction signal to an injector 111c.

Consequently, it is possible to reduce the number of controllers in the entire control system, whereby a simple configuration and cost reduction can be achieved.

The present invention is not limited to the embodiments described above, but may be embodied in other specific forms. These embodiments are therefore to be considered in all respects as illustrative and not restrictive. The scope of the present invention is indicated by the appended claims rather than by the foregoing description. All changes and modifications which come within the meaning and range of equivalency of the claims are therefore intended to be embraced therein.

For example, each of the embodiments described above has dealt with the configuration in which the reciprocating engine 1 (101) is employed as the power source of the electricity generator 2. However, the present invention is not limited to this. The present invention is applicable also to a configuration in which the reciprocating engine 1 (101) is employed as a power source of other device such as a water pump or an oil pump.

Furthermore, each of the embodiments described above relates to the configuration in which the present invention is applied to the reciprocating engine 1 (101) including a single cylinder. However, the present invention is not limited to this. The present invention is applicable also to a multi-cylinder reciprocating engine.

Moreover, each of the embodiments described above relates to the configuration in which the electric motor 74 is the alternating current motor. However, the present invention is not limited to this. Alternatively, the electric motor 74 may be a direct current motor.

Furthermore, each of the embodiments described above relates to the configuration in which the balance shaft 72 and the balance weight 73 are separate members. Alternatively, the balance shaft 72 and the balance weight 73 may be integrally configured.

The present invention is not limited to the embodiments described above, but may be implemented in other various modes. These embodiments are therefore to be considered in all respects as illustrative and not restrictive. The scope of the present invention is indicated by the appended claims rather than by the foregoing description. All changes and modifications which come within the meaning and range of equivalency of the claims are therefore intended to be embraced therein.

The present application claims priority based on Japanese Patent Application No. 2016-035526 filed in Japan on February 26, 2016. The entire contents of this application are hereby incorporated herein by reference.

Industrial Applicability

The present invention is applicable to a vibration reduction device for reducing vibrations caused by a reciprocating movement of a piston in a reciprocating engine.

Reference Signs List

1    Stirling engine (reciprocating engine)
11   cylinder
12   displacer piston (first piston)

13 power piston (second piston)
14 crankshaft
15 crankcase
2 electricity generator
5 vibration reduction device
6 counterweight
7 electric balancer (balancer)
72 balance shaft
73 balance weight
74 electric motor
101 internal combustion engine (reciprocating engine)
112 piston
114 crankshaft
O1 center line of crankshaft (vibration reduction target position)
O2 center line of balance shaft
O3 center line of piston
G1 center of gravity of balance weight

**Claims**

1. A vibration reduction device comprising:

   a counterweight provided to a crankshaft driven by a reciprocating movement of a piston of a reciprocating engine; and
   a balancer including a balance shaft driven independently from the crankshaft and a balance weight that is provided to the balance shaft and is integrally rotatable with the balance shaft, wherein
   a center line of the balance shaft and a center line of the crankshaft are substantially in parallel to each other, and a virtual plane including the center lines is substantially perpendicular to a center line of the piston.

2. A vibration reduction device comprising:

   a counterweight provided to a crankshaft driven by a reciprocating movement of a piston of a reciprocating engine; and
   a balancer including a balance shaft driven independently from the crankshaft and a balance weight that is provided to the balance shaft and is integrally rotatable with the balance shaft, wherein
   an inertial force of the counterweight is set at approximately a half of a combined inertial force of the piston, and a mass of the balance weight is set so that the following formula is established: inertial force of balance weight $\times$ L2 = 1/2 $\times$ combined inertial force of piston $\times$ L1, where L1 denotes a distance between a vibration reduction target position and a rotation center of the crankshaft and L2 denotes a distance between the vibration reduction target position and a rotation center of the balance weight.

3. The vibration reduction device according to claim 2, wherein
   a direction of the reciprocating movement of the piston is a horizontal direction, and the balancer is attached to an upper surface of a crankcase in which the crankshaft is accommodated.

4. The vibration reduction device according any one of claims 1 to 3, wherein
   the balancer comprises two balancers disposed on two opposed sides of the crankshaft, respectively, such that the crankshaft is interposed between the two balancers, the two balancers being driven independently from each other, a rotational direction of a balance weight of one of the two balancers being set to be opposite to a rotational direction of the crankshaft, a rotational direction of a balance weight of the other of the two balancers being set to be identical to the rotational direction of the crankshaft.

5. The vibration reduction device according to any one of claims 1 to 4, wherein
   a rotational power source of the balance shaft and the balance weight in the balancer is an electric motor,
   the crankshaft is connected to an electricity generator configured to generate electricity by making use of rotation of the crankshaft, and
   part of the electricity generated by the electricity generator is supplied to the electric motor.

**6.** The vibration reduction device according to any one of claims 1 to 5, wherein
the reciprocating engine includes a cylinder in which a first piston and a second piston are accommodated, and the first piston and the second piston are configured to perform individual reciprocating movements in the cylinder, and rotation of the balance weight is controlled to generate a centrifugal force in a direction for cancelling a resultant force of an inertial force caused by the reciprocating movement of the first piston and an inertial force caused by the reciprocating movement of the second piston.

FIG.1

EP 3 421 836 A1

FIG.2

FIG.3

FIG.4

FIG.5

FIG.6

SYNTHESIZED
WAVE

VIBRATION
REDUCTION
DEVICE

POWER
PISTON

DISPLACER
PISTON

AMPLITUDE

FIG.7

FIG.8

FIG.9

FIG.10

FIG.11

FIG.12

EP 3 421 836 A1

FIG.13

FIG.14

FIG.15

FIG.16

FIG.17

## INTERNATIONAL SEARCH REPORT

| | International application No. |
|---|---|
| | PCT/JP2017/004860 |

### A. CLASSIFICATION OF SUBJECT MATTER
*F16F15/26*(2006.01)i, *F01B7/16*(2006.01)i, *F01B9/02*(2006.01)i, *F02G1/053*(2006.01)i, *F16C3/08*(2006.01)i, *F02B77/00*(2006.01)n

According to International Patent Classification (IPC) or to both national classification and IPC

### B. FIELDS SEARCHED

Minimum documentation searched (classification system followed by classification symbols)
F16F15/26, F01B7/16, F01B9/02, F02G1/053, F16C3/08, F02B77/00

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-240690 A  (Mitsubishi Motors Corp.),<br>25 December 2014 (25.12.2014),<br>paragraphs [0019] to [0022], [0028] to [0031],<br>[0063] to [0066]; fig. 1 to 6, 18<br>(Family: none) | 1-4<br>5-6 |
| Y | JP 2006-46324 A  (Yamaha Motor Co., Ltd.),<br>16 February 2006 (16.02.2006),<br>paragraph [0026]<br>& EP 1614939 A1<br>paragraph [0035]<br>& WO 2006/006435 A1 | 5-6 |
| Y | JP 4-311656 A  (Naoji ISSHIKI),<br>04 November 1992 (04.11.1992),<br>paragraph [0007]; fig. 1<br>(Family: none) | 6 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>20 April 2017 (20.04.17) | Date of mailing of the international search report<br>09 May 2017 (09.05.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## INTERNATIONAL SEARCH REPORT

| | International application No. |
|---|---|
| | PCT/JP2017/004860 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-38126 A  (Toyota Motor Corp.),<br>09 February 2006 (09.02.2006),<br>entire text; all drawings<br>(Family: none) | 1-6 |
| A | JP 2009-281458 A  (Honda Motor Co., Ltd.),<br>03 December 2009 (03.12.2009),<br>entire text; all drawings<br>(Family: none) | 1-6 |

Form PCT/ISA/210 (continuation of second sheet) (January 2015)

**REFERENCES CITED IN THE DESCRIPTION**

**Patent documents cited in the description**

- JP S60234146 B

- JP 2016035526 A